(19) Europäisches Patentamt
European Patent Office
Office européen des brevets

(11) **EP 2 801 944 A1**

(12) **EUROPEAN PATENT APPLICATION**
published in accordance with Art. 153(4) EPC

(43) Date of publication:
**12.11.2014 Bulletin 2014/46**

(51) Int Cl.:
***G06Q 30/00*** (2012.01)

(21) Application number: **13733711.9**

(22) Date of filing: **03.01.2013**

(86) International application number:
**PCT/KR2013/000021**

(87) International publication number:
**WO 2013/103241 (11.07.2013 Gazette 2013/28)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.01.2012 KR 20120001863**

(71) Applicant: **Samsung Electronics Co., Ltd.
Suwon-si, Gyeonggi-do, 443-742 (KR)**

(72) Inventors:
• **KANG, Hyeon-Jin
Seoul 137-773Suwon-shi
Gyeonggi-do 443-742 (KR)**

• **MOON, Sang-Jun
Seoul 137-773Suwon-shi
Gyeonggi-do 443-742 (KR)**
• **PARK, Yong-Seok
Seoul 137-773Suwon-shi
Gyeonggi-do 443-742 (KR)**

(74) Representative: **Grünecker, Kinkeldey,
Stockmair & Schwanhäusser
Leopoldstrasse 4
80802 München (DE)**

(54) **DEVICE AND METHOD FOR PROVIDING ADVERTISEMENT**

(57)    The present invention relates to a device and method for providing an advertisement based on content buffering time. The device for providing an advertisement according to the present invention includes: a calculation unit calculating an expected buffering time for content selected by a user, a selection unit selecting at least one of a plurality of advertisements that corresponds to the calculated expected buffering time; and a providing unit providing the advertisement selected by the selection unit to a user terminal.

FIG.3

**Description**

[Technical Field]

The present disclosure relates to providing an advertisement through a communication system, and more particularly, to a device and method for providing an advertisement based on a buffering time of contents.

[Background Art]

Recently, with the speed-up tendency of wired and wireless communication, various high-quality contents may be enjoyed through web sites, multimedia applications, game consoles, Internet Protocol TVs (IPTVs), and the like.

The IPTV provides a Video-On-Demand (VOD) service to provide a user-desired broadcasting program. Generally, the VOD service mainly provides voluminous contents in real time according to a user's demand. The VOD service provides contents such as movies, dramas, music videos, and the like as a main service, but may also immediately provide various digital data such as music including only audio, still images, games, documents, and the like upon demanded.

The VOD service provides play, stop, pause, fast forward, fast rewind, and playback in an arbitrary position like a general video device.

To receive the VOD service, contents may be provided to a user after buffered. Generally, the VOD service may repetitively provide at least one advertisement until buffering is completed, or may provide contents after a fixed number of advertisements are provided even if buffering of the contents is completed.

Thus, conventionally, even if the user may view contents after buffering of the contents is completed, an advertisement is provided without considering a buffering time, such that the user may feel that the advertisement is boring, degrading the effects of the advertisement.

[Disclosure]

[Technical Problem]

An aspect of the present disclosure is to provide an apparatus and method to provide an advertisement based on a buffering time of contents.

Another aspect of the present disclosure is to provide an apparatus and method to determine the number and length of advertisements to be provided, based on a buffering time of contents and an advertisement playback time.

[Technical Solution]

According to an aspect of the present disclosure, there is provided an apparatus for providing advertisement.

In accordance with an embodiment of the present disclosure, an apparatus for providing advertisement includes a calculation unit configured to calculate an expected buffering time regarding contents selected by a user, a selection unit configured to select at least one advertisement corresponding to the calculated expected buffering time from among a plurality of advertisements, and a providing unit configured to provide the advertisement selected by the selection unit through a user terminal.

In accordance with another embodiment of the present disclosure, an advertisement providing method includes calculating an expected buffering time regarding contents selected by a user, selecting at least one advertisement corresponding to the calculated expected buffering time from among a plurality of advertisements, and providing the advertisement selected by the selection unit through a user terminal.

According to an embodiment of the present disclosure, an advertisement may be provided considering a buffering time of contents, thereby preventing a user from feel bored of the advertisement, and the advertisement is accepted during the contents buffering time, thereby reducing a buffering time the user feels.

Moreover, the advertisement is provided based on the buffering time and the advertisement play time, thereby providing various advertisements and increasing advertisement profits.

Effects that can be obtained or expected from the embodiments of the present disclosure will be explicitly or implicitly disclosed by the detailed description of the embodiments of the present disclosure. That is, various effects expected from the embodiments of the present disclosure will be disclosed in the following description.

[Description of Drawings]

FIG. 1 is a diagram illustrating an advertisement providing system according to an embodiment of the present disclosure;
FIG. 2 is a block diagram of an advertisement provider according to an embodiment of the present disclosure;
FIG. 3 is a flowchart illustrating an advertisement providing method according to an embodiment of the present disclosure;
FIG. 4 is a diagram illustrating an advertisement providing system according to another embodiment of the present disclosure;
FIG. 5 is a flowchart illustrating an advertisement providing system according to another embodiment of the present disclosure;
FIG. 6 is a diagram illustrating an advertisement providing system according to another embodiment of the present disclosure; and

FIG. 7 is a flowchart illustrating an advertisement providing system according to another embodiment of the present disclosure.

[Mode for Carrying out the Invention]

Hereinafter, operation principles of embodiments of an apparatus and method according to the present disclosure will now be described in detail with reference to the accompanying drawings. The attached drawings and the following detailed description concern one of exemplary embodiments for effectively describing characteristics of the present disclosure. Thus, the present disclosure should not be limited to the accompanying drawings and the following description.

Also, in the following description, a detailed description of known functions and configurations incorporated herein will be omitted when it may obscure the subject matter of the present disclosure. Terms used herein are defined based on functions in the present disclosure and may vary according to users, operators' intention or usual practices. Therefore, the definition of the terms should be made based on contents throughout the specification.

To efficiently describe technical characteristics of the present disclosure, terms may be properly modified, integrated, or separated to allow those of ordinary skill in the art to apparently understand the present disclosure, but the present disclosure is not limited to the terms.

In an embodiment of the present disclosure to be described later, a description will be made regarding a scheme in which if a user selects contents, an expected buffering time of the contents is calculated to provide an advertisement during buffering of the user-selected contents and an advertisement corresponding to the calculated expected buffering time is provided.

Hereinafter, an embodiment of the present disclosure will be described in detail with reference to the accompanying drawings.

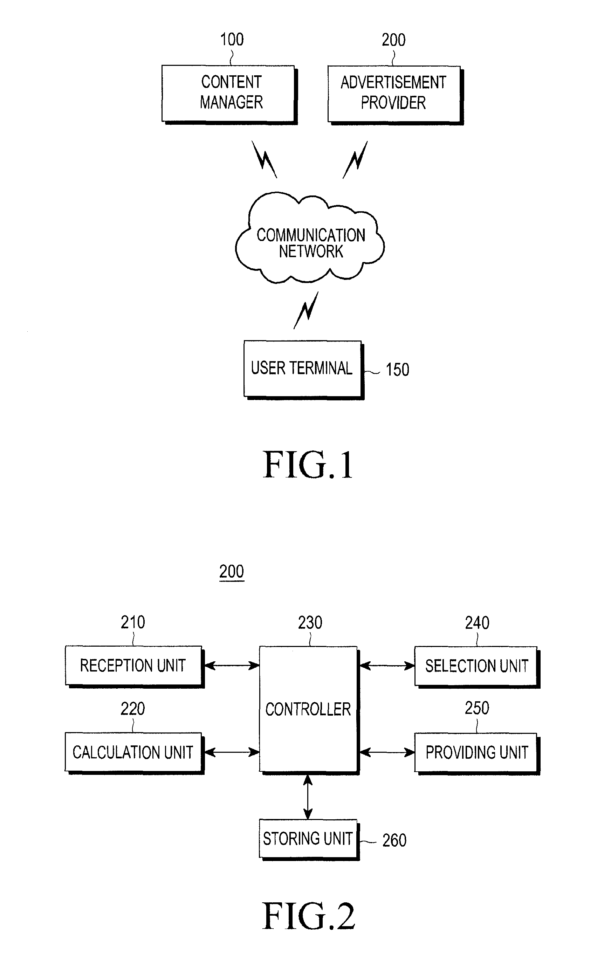

In FIGs. 1 through 5, a description will be made using an example in which an advertisement provider and a user terminal are separately formed.

FIG. 1 is a diagram illustrating an advertisement providing system according to an embodiment of the present disclosure.

Referring to FIG. 1, the advertisement providing system may include a contents manager 100, a user terminal 150, and an advertisement provider 200.

The contents manager 100 stores and manages contents. In other words, if the user terminal 150 requests contents, the contents manager 100 identifies contents based on contents identification information regarding the user-selected contents. The contents manager 100 transmits the identified contents to the user terminal 150. The contents manager 100 may be plural depending on genres of contents, contents providing companies for providing contents, contents broadcasting companies for broadcasting contents, and so forth.

The user terminal 150 is a play device that receives contents requested by the user from the contents manager 100 and displays the contents, and displays at least one advertisement provided from the advertisement provider 200 during buffering of contents from the contents manager 100. More specifically, if the user requests playback of contents, the user terminal 150 sends a request for the user-selected contents to the contents manager 100 and sends a request for an advertisement to be played during buffering of the contents to the advertisement provider 200. The user terminal 150 plays the advertisement received from the advertisement provider 200 during buffering of the contents. That is, the user terminal 150 may play and display an advertisement to correspond to a buffering time of the contents. The user terminal 150 receives the user-selected contents from the contents manager 100, and plays the contents.

The user terminal 150 may be of any type if it sends a request for contents to the contents manager 100 to display the contents and receives and displays an advertisement from the advertisement provider 200. For example, the user terminal 150 may be any one of a mobile communication terminal capable of performing voice communication or video communication such as a Wideband Code Division Multiple Access (WCDMA) phone, a smart phone, or the like, a computer such as a tablet Personal Computer (PC), a desktop, a laptop, a netbook, or the like, an e-book, a Personal Digital Assistant (PDA), a TV, and a set-top box.

The advertisement provider 200 provides an advertisement to be displayed during buffering of the user-selected contents in the user terminal 150 to the user terminal 150. In other words, if the user terminal 150 requests an advertisement, the advertisement provider 200 calculates an expected buffering time based on the contents selected in the user terminal 150. The advertisement provider 200 selects an advertisement from among a plurality of advertisements based on an expected buffering time. The advertisement provider 200 provides the selected advertisement to the user terminal 150. The advertisement provider 200 will be described in more detail with reference to FIG. 2.

Herein, while the advertisement provider 200 and the contents manager 100 have been separately described, the present disclosure is not limited thereto and they may be formed in one device to provide user-selected contents and advertisement to the user terminal 150.

FIG. 2 is a block diagram of an advertisement provider according to an embodiment of the present disclosure.

Referring to FIG. 2, the advertisement provider 200 may include a reception unit 210, a calculation unit 220, a controller 230, a selection unit 240, a providing unit 250, and a storing unit 260.

The reception unit 210 connects to the user terminal 150 to receive data from the user terminal 150. That is, the reception unit 210 receives advertisement request information including an available bandwidth of the user terminal 150 and contents identification information of the user-selected contents from the user terminal 150.

The calculation unit 220 calculates an expected buffering time based on the advertisement request information received from the user terminal 150. In other words, the calculation unit 220 receives the advertisement request information from the reception unit 210 and extracts the available bandwidth of the user terminal 150 and the contents identification information, which are included in the advertisement request information. The calculation unit 220 identifies the user-selected contents based on the contents identification information and determines a contents buffering size of the contents. The contents buffering size indicates a size of the contents that may be played in the user terminal 150 out of a total size of the contents. In another embodiment, the contents buffering size means a unit size for providing or buffering contents, and may be determined according to characteristics of the contents or may be set by the contents manager 100.

The calculation unit 220 determines an advertisement buffering size indicating a unit size for buffering an advertisement. The advertisement buffering size may be set to a specific value. For example, the calculation unit 220 may determine an average buffering size of an advertisement to set the advertisement buffering size or may obtain information about the advertisement buffering size set by a manager or a program.

The calculation unit 220 calculates an expected buffering time based on an available bandwidth, a contents buffering size, and an advertisement buffering size.

The controller 230 controls the overall operation of the advertisement provider 200. That is, the controller 230 controls components of the advertisement provider 200, including the reception unit 210, the calculation unit 220, the selection unit 240, the providing unit 250, and the storing unit 260. For example, upon receiving advertisement request information through the reception unit 210, the controller 230 controls the calculation unit 220 to calculate an expected buffering time. The controller 230 controls the selection unit 240 to select an advertisement. Once the advertisement is selected in the selection unit 240, the controller 230 controls the providing unit 250 to transmit the advertisement to the user terminal 150.

The selection unit 240 selects the advertisement based on the expected buffering time. In other words, the selection unit 240 selects at least one advertisement based on an advertisement play time of one of a plurality of advertisements stored in the storing unit 260. That is, the selection unit 240 may select an advertisement such that a sum of the expected buffering time and a playback time of the selected advertisement is as close as possible to the expected buffering time. The selection unit 240 may also select an advertisement associated with contents, such as a genre of the contents, a title of the contents, a main character, a director, a writer, and the like that are identified from the contents identification information. The selection unit 240 may also select an advertisement according to user's preference.

The selection unit 240 generates an advertisement play list including advertisement identification information, advertisement play time information, and the like regarding an advertisement selected based on the advertisement list stored in the storing unit 260. The selection unit 240 sets an advertisement play order and includes the advertisement play order in the advertisement play list. Herein, the advertisement play order may be set by a manager or may be set according to user's preference. The advertisement play order may be set arbitrarily in the selection unit 240.

If the advertisement play list is transmitted to the user terminal 150 without including the advertisement play order, the user terminal 150 may play at least one advertisement included in the advertisement play list according to an order set by a user and a manager or according to an arbitrary order.

The providing unit 250 connects to the user terminal 150 to provide data to the user terminal 150. That is, the providing unit 250 transmits the advertisement play list generated in the selection unit 240 to the user terminal 150 that has requested the advertisement. The providing unit 250 transmits the advertisement play list to the user terminal 150 based on address information of the user terminal 150. Herein, the address information indicates information necessary for connection to the user terminal and transmission of data to the user terminal 150. The address information may be phone number information and IP information of the user terminal 150, and so forth.

While the reception unit 210 and the providing unit 250 are separately described, the present disclosure is not limited to this example and they may be formed as one component to connect to the user terminal 150 and to receive data from the user terminal 150 or to transmit data to the user terminal 150.

The storing unit 260 stores various programs for controlling the overall operation of the advertisement provider 200. The storing unit 260 stores data necessary for components of the advertisement provider 200 and data generated by the components of the advertisement provider 200. For example, the storing unit 260 stores an advertisement list to correspond to advertisement identification information and advertisement play time information for each of a plurality of advertisements. The storing unit 260 may also store an advertisement to correspond to the advertisement identification information. The storing unit 260 stores advertisement request information received through the reception unit 210 and stores an expected buffering time calculated through the calculation unit 220. The storing unit 260 stores an advertisement selected in and an advertisement play list generated in the selection unit 240.

The storing unit 260 provides necessary data according to requests of the reception unit 210, the calculation unit 220, the controller 230, the selection unit 240, and the providing unit 250. The storing unit 260 may include an integrated memory or a plurality of memories. For example, the storing unit 260 may include a Read Only Memory (ROM), a Random Access Memory (RAM), a flash memory, and the like.

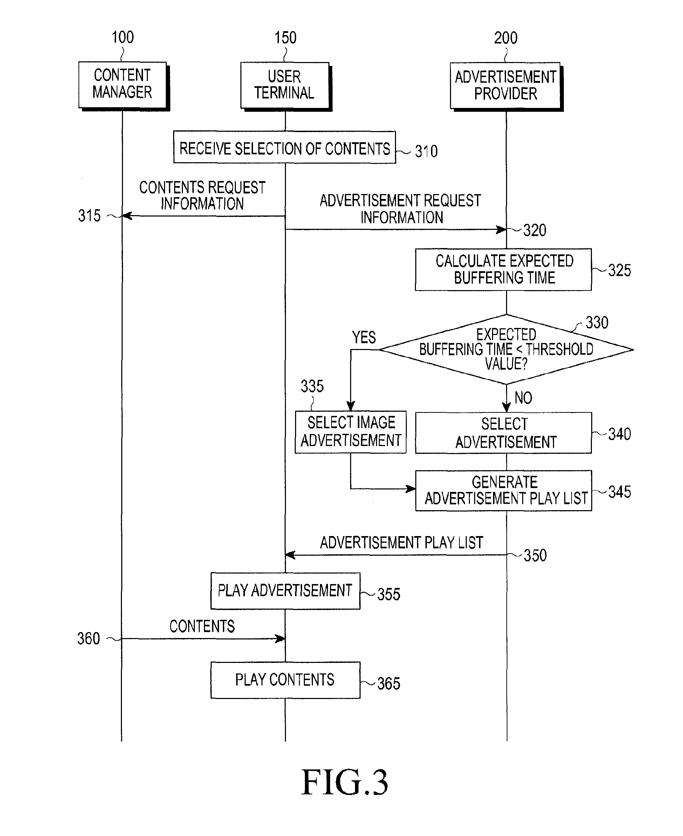

FIG. 3 is a flowchart illustrating an advertisement providing method according to an embodiment of the present disclosure.

Referring to FIG. 3, the user terminal 150 receives selection of one of a plurality of contents from the user in operation 310.

The user terminal 150 generates contents request information including contents identification information regarding the contents selected by the user and transmits the generated contents request information to the contents manager 100 in operation 315.

The user terminal 150 generates advertisement request information including an available bandwidth of the user terminal 150 to provide an advertisement to the user during buffering of the contents, and transmits the generated advertisement request information to the advertisement provider 200 in operation 320. The advertisement request information may include contents identification information and/or a contents buffering size that is set by the user terminal 150 or the contents manager 100. If the contents buffering size is set by the contents manager 100, the user terminal 150 may obtain information about the contents buffering size when selecting contents or connecting to the contents manager 100. According to another embodiment, the contents buffering size may be determined by the user terminal 150 based on at least one of a resolution of the user terminal 150, a speed of connection with the contents manager 100, a battery state, and location information. The advertisement may be an image advertisement or a video advertisement. Hereinafter, the advertisement means a video advertisement unless a type of the advertisement is specifically mentioned.

Although a description has been made using an example in which advertisement request information is transmitted to the advertisement provider 200 after the user terminal 150 transmits contents request information to the contents manager 100, the present disclosure is not limited to this example, and the user terminal 150 may simultaneously transmit the contents request information and the advertisement request information or may transmit the contents request information after transmitting the advertisement request information, or vice versa.

The advertisement provider 200 receives the advertisement request information from the user terminal 150 and calculates the expected buffering time based on the advertisement request information in operation 325. In an embodiment, the advertisement provider 200 determines a contents buffering size based on contents identification information included in the advertisement request information. In a selectable embodiment, the advertisement provider 200 detects the contents buffering size included in the advertisement request information. The advertisement provider 200 calculates the expected buffering time based on an available bandwidth, a contents buffering size, and an advertisement buffering size that are obtained based on the advertisement request information. In a selectable embodiment, the advertisement buffering size may be stored in advance in the advertisement provider 200 or may be set by the advertisement provider 200. For example, the advertisement provider 200 may define the expected buffering time as follows:

$$[Equation\ 1]$$

$$T = \frac{s+S}{B}\ ,$$

where T indicates an expected buffering time, s indicates an advertisement buffering size, S indicates a contents buffering size, and B indicates an available bandwidth. That is, the advertisement provider 200 may calculate the expected buffering time by substituting the advertisement buffering size into s, the contents buffering size into S, and the available bandwidth to B in [Equation 1]. Herein, the advertisement buffering size may have a predetermined value or may be set at a fixed ratio with respect to the contents buffering size.

The advertisement provider 200 determines whether the expected buffering time is less than a predetermined threshold value in operation 330. Herein, the threshold value is a value serving as a criterion for selecting an image advertisement, and may be set by a manager, a program, or a user. Such determination of whether the expected buffering time is less than the threshold value is intended to provide an image advertisement instead of a video advertisement because the user cannot wholly view the video advertisement if the expected buffering time is short to provide the video advertisement.

If the expected buffering time is less than the threshold value, the advertisement provider 200 sets the number of advertisements based on the expected buffering time and a preset exposure time, and selects a preset number of image advertisements from among a plurality of image advertisements stored in advance in operation 335. For example, the advertisement provider 200 defines the number of advertisements as follows:

$$[Equation\ 2]$$

$$n = \left[\frac{T}{t}\right],$$

where n indicates the number of advertisements, t indicates an exposure time, and T indicates the expected buffering time. Herein, the exposure time indicates a time during which the user may identify and determine an image advertisement, and may be set by the user or a manager or by the advertisement provider 200. That is, the advertisement provider 200 substitutes the exposure time to t of Equation 2 and substitutes the calculated expected buffering time to T to set the number of advertisements. The advertisement provider 200 selects image advertisements corresponding to the set number of advertisements from among the plurality of image advertisements stored in advance. The advertisement provider 200 may select at least one of an image advertisement associated with contents, an image advertisement corresponding to a user-set preference, and an image advertisement selected arbitrarily.

The advertisement provider 200 selects the number of advertisements to be played and at least one advertisement to be played, based on the expected buffering time and an advertisement play time of each advertisement, if the expected buffering time is greater than the threshold value, in operation 340. In other words, the advertisement provider 200 selects at least one advertisement such that a total play time of the at least one advertisement is less than, and at the same time, as close as possible to the expected buffering time. The advertisement provider 200 may define the buffering expected time and the total play time of the at least one advertisement as in [Equation 3]:

[Equation 3]

$$T \approx \sum_{k=1}^{n} t_k$$

and

$$T \leq \sum_{k=1}^{n} t_k ,$$

where T indicates the buffering expected time, $t_k$ indicates a play time of a $k^{th}$ video advertisement, and

$\sum_{k=1}^{n} t_k$ indicates the total play time that is a sum of play times of advertisements. That is, the advertisement provider 200 may select the at least one advertisement by setting the total play time of the advertisement to be close to and greater than the expected buffering time.

The advertisement provider 200 may define the expected buffering time and the total play time of the advertisement as in Equation 4:

[Equation 4]

$$T \approx \sum_{k=1}^{n} t_k$$

and

$$T \geq \sum_{k=1}^{n} t_k ,$$

where T indicates the expected buffering time and

$\sum_{k=1}^{n} t_k$ indicates the total play time that is a sum of play times of advertisements. That is, the advertisement provider 200 may select at least one advertisement to be played, such that the total play time of the advertisement is as close as possible to and less than the expected buffering time. The advertisement provider 200 may provide a User Interface (UI) screen to display a preset display phrase through the user terminal 150, if the expected buffering time is greater than the total play time of the advertisement. Herein, the display phrase indicates a phrase to be provided to the user and may be set by the manager. For example, the display phrase may be "Advertisement Play Completed", "Contents Buffering Completed", or the like. The advertisement provider 200 may further select at least one image advertisement based on an exposure time corresponding to a difference between the expected buffering time and the total play time of the advertisement.

The advertisement provider 200 generates an advertisement play list of the selected advertisement in operation 345. The advertisement provider 200 may generate an advertisement play list including information about the advertisement such as advertisement identification information, an advertisement play time, and an advertisement order for each advertisement and including the advertisement.

The advertisement provider 200 transmits the generated advertisement play list to the user terminal 150 in operation 350.

The user terminal 150 receives the advertisement play list and at least one advertisement corresponding thereto from the advertisement provider 200 during buffering of the contents, and plays the at least one advertisement based on the received advertisement play list in operation 355.

The contents manager 100 transmits the contents to the user terminal 150 in operation 360.

The user terminal 150 stops playing the advertisement upon receiving contents corresponding to a predetermined contents buffering size from the contents manager 100, and plays the contents received from the contents manager 100 in operation 365. Once receiving contents corresponding to a size that can be played in the user terminal 150 or that can be provided by the contents manager 100 from the contents manager 100, the user terminal 150 starts playing the contents and continues receiving the remaining part of the contents from the contents manager 100.

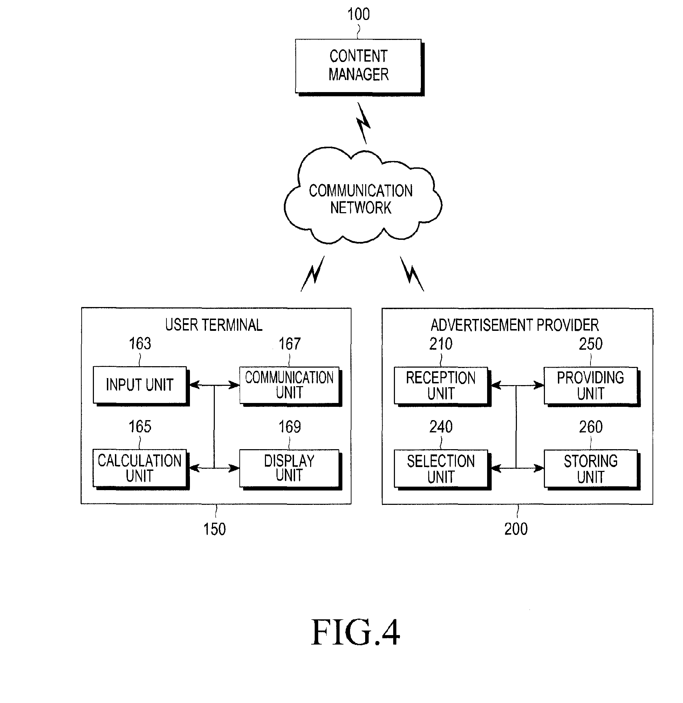

FIG. 4 is a diagram illustrating an advertisement providing system according to another embodiment of the present disclosure.

Referring to FIG. 4, the advertisement providing system may include the contents manager 100, the user terminal 150, and the advertisement provider 200.

The contents manager 100 connects to the user terminal 150 to receive contents request information from the user terminal 150. The contents manager 100 identifies contents based on contents identification information included in the contents request information and provides the identified contents to the user terminal 150.

The user terminal 150 receives selection of contents from the user and calculates an expected buffering time based on the selected contents. To this end, the user terminal 150 may include an input unit 163, a calculation unit 165, a communication unit 167, and a display unit 169.

The input unit 163 is a UI for receiving input of various data from the user. The input unit 163 is a means for receiving input of a control command, a function selection command, and the like from the user to control operations of the user terminal 150. That is, the input unit 163 may receive a request of contents from the user through a UI screen displayed on the display unit 169. In this case, the input unit 163 may receive input of information for identifying contents like a title of the contents from the user or display a plurality of contents on the UI screen and receive selection of one of the plurality of contents.

The input unit 163 may be of any type if it can receive input of data from the user. For example, the input unit 163 may be a remote controller. The input unit 163 may be configured to receive data from the user through a keypad displayed on the display unit 169 or a separately formed keypad.

The calculation unit 165 determines a contents buffering size of the contents selected by the user through the input unit 163, and determines an available bandwidth of the user terminal 150. The calculation unit 165 determines an advertisement buffering size that is a fixed value or is set at a fixed rate of the contents buffering size. The calculation unit 165 calculates the expected buffering time based on the contents buffering size, the advertisement buffering size, and the available bandwidth. The calculation unit 165 generates advertisement request information including at least one of the terminal identification information of the user terminal 150, the contents identification information, and the calculated expected buffering time.

The communication unit 167 connects to the advertisement provider 200 to transmit and receive data. That is, the communication unit 167 transmits the advertisement request information generated through the calculation unit 165 to the advertisement provider 200 and receives at least one advertisement selected from the advertisement provider 200.

The display unit 169 is a means for displaying operation information and result information generated during operations of the user terminal 150 to allow the user to check the operation information and the result information. For example, the display unit 169 may display a UI screen for receiving selection of contents from the user. In this case, the user may select one of a plurality of contents displayed through the UI screen or may input characters corresponding to the title of the contents through the input unit 163. The display unit 169 may also play the advertisement received from the advertisement provider 200. The display unit 169 may receive the user-selected contents from the contents manager 100 and display the contents.

The display unit 169 displays numbers or characters input through the input unit 163 to allow the user to see the numbers or characters. The display unit 169 displays data stored in the storing unit 260.

The display unit 169 may be of any type if it can display contents and an advertisement. For example, the display unit 169 may be one of a Liquid Crystal Display (LCD), an Organic Light Emitting Display (OLED), and an Electro Phoretic Display (EPD).

Once the user terminal 150 requests an advertisement, the advertisement provider 200 selects an advertisement corresponding to an expected buffering time and provides the selected advertisement to the user terminal 150. To this end, the advertisement provider 200 may include the reception unit 210, the selection unit 240, the providing unit 250, and the storing unit 260.

The reception unit 210 connects to the user terminal 150 to receive data from the user terminal 150. That is, the reception unit 210 receives advertisement request information from the user terminal 150 over a communication network.

The selection unit 240 receives the advertisement request information from the reception unit 210 and extracts an expected buffering time included in the advertisement request information. The selection unit 240 selects at least one advertisement based on an advertisement play time of an advertisement to correspond to the extracted expected buffering time.

The providing unit 250 connects to the user terminal 150 to provide the advertisement to the user terminal 150.

The storing unit 260 stores data necessary for the components of the advertisement provider 200 and data generated in the components of the advertisement provider 200. For example, the storing unit 260 may store a plurality of advertisements and may store advertisement identification information and advertisement play time corresponding to each advertisement. The storing unit 260 may also store the advertisement request information received from the user terminal 150. The storing unit 260 stores the advertisement selected in the selection unit 240.

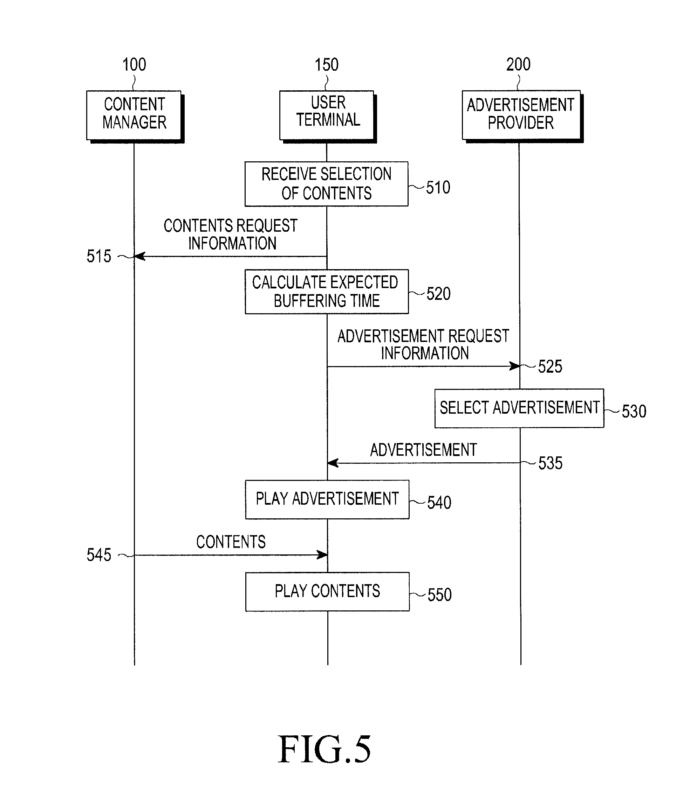

FIG. 5 is a flowchart illustrating an advertisement providing system according to another embodiment of the present disclosure.

Referring to FIG. 5, the user terminal 150 receives selection of contents from the user through the UI screen in operation 510.

The user terminal 150 generates contents request information including contents identification information of the user-selected contents and transmits the generated contents request information to the contents manager 100 in operation 515. Meanwhile, the contents request information is transmitted to the contents manager 100 before the expected buffering time is calculated, but the present disclosure is not limited thereto and the contents request information may be transmitted after selection of the contents or before transmission of the advertisement request information.

The user terminal 150 calculates an expected buffering time of contents based on a contents buffering size and an available bandwidth in operation 520. The user terminal 150 calculates the expected buffering time of the contents, taking account of a general advertisement buffering size of an advertisement.

The user terminal 150 generates advertisement request information including the expected buffering time to receive an advertisement from the advertisement provider 200, and transmits the generated advertisement request information to the advertisement provider 200 in operation 525.

The advertisement provider 200 receives the advertisement request information from the user terminal 150 and selects at least one advertisement from among the plurality of advertisements based on an advertisement play time of the advertisement to correspond to the expected buffering time included in the advertisement request information in operation 530.

The advertisement provider 200 transmits the selected advertisement to the user terminal 150 in operation 535. The advertisement provider 200 generates an advertisement play list including advertisement identification information and advertisement play time regarding the selected advertisement, and transmits the generated advertisement play list to the user terminal 150.

The user terminal 150 plays the advertisement received from the contents manager 100 prior to completion of reception of the contents, that is, during a buffering time, in operation 540.

The contents manager 100 transmits the contents corresponding to the contents identification information included in the contents request information in operation 545.

Upon receiving the contents from the contents manager 100, the user terminal 150 stops playing the advertisement and plays the contents in operation 550.

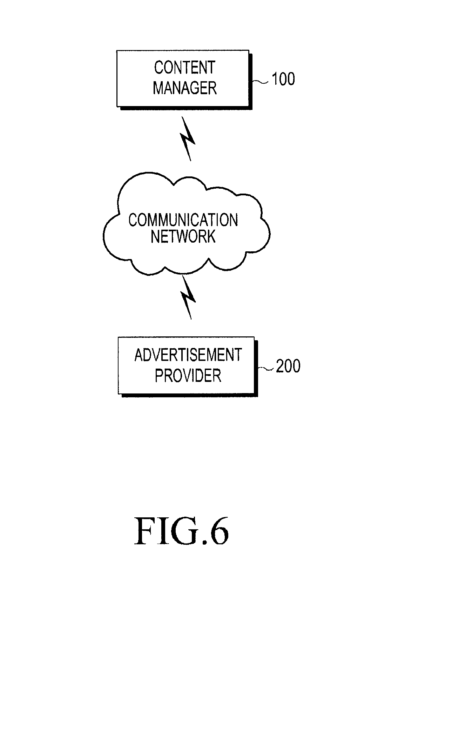

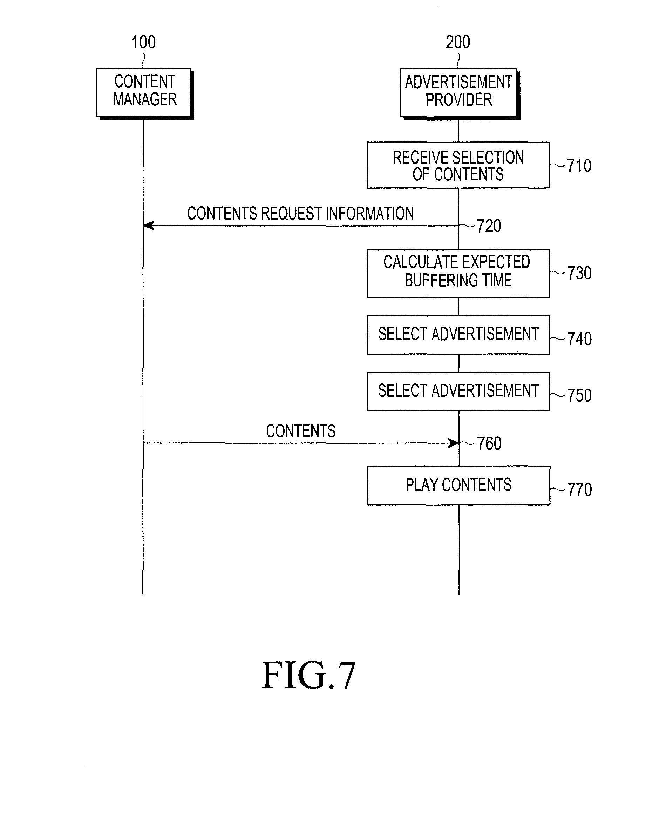

With reference to FIGs. 6 and 7, a description will be made using an example in which an advertisement provider is a user terminal. Hereinafter, an advertisement providing system will be described based on a method for providing an advertisement.

FIG. 6 is a diagram illustrating an advertisement providing system according to another embodiment of the present disclosure, and FIG. 7 is a flowchart illustrating an advertisement providing system according to another embodiment of the present disclosure.

Referring to FIGs. 6 and 7, the advertisement provider 200 receives selection of one of a plurality of contents from the user in operation 710. The advertisement provider 200 generates contents request information including contents identification information regarding the contents selected from the user to send a request for the contents to the contents manager 100.

The advertisement provider 200 transmits the generated contents request information to the contents manager 100 in operation 720. The contents manager 100 receives the contents request information from the advertisement provider 200. The contents manager 100 extracts contents identification information from the received contents request information and identifies the contents requested by the user based on the contents identification information. The contents manager 100 provides the identified contents to the advertisement provider 200.

The advertisement provider 200 calculates an expected buffering time based on a contents buffering size and an available bandwidth in operation 730. The contents buffering size may be extracted from the contents request information, may be determined from the contents identification information included in the contents request information, or may be provided from the contents manager 100 to the advertisement provider 200. Because of storing advertisements in advance, the advertisement provider 200 may calculate the expected buffering time using the aforementioned [Equation 1] without considering an advertisement buffering size, that is, by setting the advertisement buffering size to 0.

The advertisement provider 200 selects at least one advertisement having a number and a length corresponding to the calculated expected buffering time from among the stored plurality of advertisements in operation 740. The advertisement provider 200 may receive and store an advertisement from an external device (not illustrated) before selecting an advertisement. The advertisement provider 200 may select at least one advertisement corresponding to the expected buffering time from among the plurality of advertisements stored in advance based on an advertisement play time.

The advertisement provider 200 plays the at least one selected advertisement through a play device (not illustrated) in operation 750. The advertisement play device may be, for example, a user terminal or a separate play device.

The contents manager 100 completes transmission of the contents to the advertisement provider 200 in operation 760.

Once receiving contents of a predetermined contents buffering size from the contents manager 100, the advertisement provider 200 stops an advertisement and starts playing the contents received from the contents manager 100 through the play device in operation 770. That is, the play device may start playing contents upon receiving the contents corresponding to a size that can be played by the play device. During playback of the contents through the play device, the contents manager 100 continues transmitting the contents until completing transmission of a total size of the contents.

While detailed embodiments have been described in the detailed description of the present disclosure, various modifications may be possible without departing from the scope of the present disclosure. Therefore, the scope of the present disclosure should not be defined by the described embodiments, and should be defined by the appended claims and equivalents thereof.

## Claims

1. A device for providing an advertisement, the device comprising:

   a calculation unit configured to calculate an expected buffering time regarding contents selected by a user;
   a selection unit configured to select at least one advertisement corresponding to the calculated expected buffering time from among a plurality of advertisements; and
   a providing unit configured to provide the advertisement selected by the selection unit through a user terminal.

2. The device of claim 1, wherein the calculation unit is further configured to calculate the expected buffering time based on at least one of a contents buffering size indicating a unit size for buffering the contents selected by the user, an advertisement buffering size indicating a unit size for buffering an advertisement, and an available bandwidth of the user terminal.

3. The device of claim 1 or 2, wherein the calculation unit is further configured to calculate the expected buffering time based on the contents buffering size of the contents and the available bandwidth of the user terminal.

4. The device of claim 1, wherein the selection unit is further configured to select a number of advertisements from among the plurality of advertisements according to an advertisement play time of each of the plurality of advertisements based on the calculated expected buffering time and selects at least one advertisement corresponding to the selected number.

5. The device of claim 1, wherein the selection unit is further configured to select the at least one advertisement such that a total play time of the selected at least one advertisement is as close as possible to the calculated expected buffering time.

6. The device of claim 1, wherein the plurality of advertisements comprise a video advertisement and an image advertisement, and the selection unit is further configured to set a number of advertisements for each image advertisement based on a preset exposure time if the expected buffering time is less than a preset threshold value, and selects at least one image advertisement from among the plurality of image advertisements based on the set number.

7. The device of claim 1, further comprising a reception unit configured to receive contents identification information regarding the contents selected by the user from the user terminal,
   wherein the providing unit is configured to transmit an advertisement play list regarding the at least one selected advertisement to the user terminal.

8. A method for providing an advertisement, the method comprising:

   calculating an expected buffering time regarding contents selected by a user;
   selecting at least one advertisement corresponding to the calculated expected buffering time from among a plurality of advertisements; and
   providing the advertisement selected by the selection unit through a user terminal.

9. The method of claim 8, wherein the calculating of the expected buffering time comprises:

   calculating the expected buffering time based on at least one of a contents buffering size indicating a unit size for buffering the contents selected by the user,
   an advertisement buffering size indicating a unit size for buffering an advertisement, and an available bandwidth of the user terminal.

10. The method of claim 8, wherein the calculating of the expected buffering time comprises:

    calculating the expected buffering time based on the contents buffering size of the contents and the available bandwidth of the user terminal.

11. The method of claim 8, wherein the selecting of the at least one advertisement comprises:

selecting a number of advertisements from among the plurality of advertisements according to an advertisement play time of each of the plurality of advertisements based on the calculated expected buffering time and selecting at least one advertisement corresponding to the selected number.

**12.** The method of claim 8, wherein the selecting of the at least one advertisement comprises:

selecting the at least one advertisement such that a total play time of the selected at least one advertisement is as close as possible to the calculated expected buffering time.

**13.** The method of claim 8, wherein the selecting of the at least one advertisement comprises:

setting a number of advertisements for each image advertisement based on a preset exposure time if the expected buffering time is less than a preset threshold value; and
selecting at least one image advertisement from among the plurality of image advertisements based on the set number.

**14.** The method of claim 8, wherein the providing of the selected advertisement comprises:

generating an advertisement play list regarding the at least one selected advertisement; and
transmitting the advertisement play list to the user terminal that transmits contents identification information regarding the contents selected by the user.

100            200

| CONTENT MANAGER | | ADVERTISEMENT PROVIDER |

COMMUNICATION NETWORK

USER TERMINAL — 150

# FIG.1

200

210       230       240

| RECEPTION UNIT | | CONTROLLER | | SELECTION UNIT |

220                    250

| CALCULATION UNIT | | | | PROVIDING UNIT |

STORING UNIT — 260

# FIG.2

EP 2 801 944 A1

FIG.3

FIG.4

FIG.5

CONTENT MANAGER ~100

COMMUNICATION NETWORK

ADVERTISEMENT PROVIDER ~200

FIG.6

100
CONTENT MANAGER

200
ADVERTISEMENT PROVIDER

RECEIVE SELECTION OF CONTENTS ~710

CONTENTS REQUEST INFORMATION ~720

CALCULATE EXPECTED BUFFERING TIME ~730

SELECT ADVERTISEMENT ~740

SELECT ADVERTISEMENT ~750

CONTENTS ~760

PLAY CONTENTS ~770

FIG.7

# INTERNATIONAL SEARCH REPORT

International application No.

**PCT/KR2013/000021**

### A. CLASSIFICATION OF SUBJECT MATTER

**G06Q 30/02(2012.01)i**

According to International Patent Classification (IPC) or to both national classification and IPC

### B. FIELDS SEARCHED

Minimum documentation searched (classification system followed by classification symbols)

G06Q 30/02; H04L 29/02; H04W 4/16; G06Q 50/10; H04W 4/20; H04L 12/20

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: advertisement, buffering, time, bandwidth

### C. DOCUMENTS CONSIDERED TO BE RELEVANT

| Category* | Citation of document, with indication, where appropriate, of the relevant passages | Relevant to claim No. |
|---|---|---|
| Y | KR 10-2008-0052025 A (ELECTRONICS AND TELECOMMUNICATIONS RESEARCH INSTITUTE) 11 June 2008<br>See abstract, paragraphs [0019]-[0029] and claims 1-4. | 1-14 |
| Y | KR 10-2008-0024300 A (FEELINGK CO., LTD.) 18 March 2008<br>See abstract, paragraphs [0041]-[0047] and claims 1-6, 9. | 1-14 |
| Y<br>A | KR 10-2010-0107546 A (FEELINGK CO., LTD.) 06 October 2010<br>See abstract, paragraphs [0015]-[0019] and claims 1-4. | 2-3,9-10<br>1,4-8,11-14 |
| A | KR 10-2010-0019760 A (KT CORPORATION) 19 February 2010<br>See abstract and claims 1-6. | 1-14 |
| A | KR 100923780 B1 (KIM, Jung-hwan) 27 October 2009<br>See abstract, paragraphs [0026]-[0031] and claims 1-2. | 1-14 |

☐ Further documents are listed in the continuation of Box C. ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 05 APRIL 2013 (05.04.2013) | **08 APRIL 2013 (08.04.2013)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea<br>Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2013/000021**

| Patent document cited in search report | Publication date | Patent family member | Publication date |
|---|---|---|---|
| KR 10-2008-0052025 A | 11.06.2008 | NONE | |
| KR 10-2008-0024300 A | 18.03.2008 | NONE | |
| KR 10-2010-0107546 A | 06.10.2010 | NONE | |
| KR 10-2010-0019760 A | 19.02.2010 | NONE | |
| KR 10-0923780 B1 | 27.10.2009 | NONE | |

Form PCT/ISA/210 (patent family annex) (July 2009)